# EUROPÄISCHE PATENTSCHRIFT

(11) **EP 2 059 730 B1**
(45) Veröffentlichungstag und Bekanntmachung des Hinweises auf die Patenterteilung: **14.09.2016**
(21) Anmeldenummer: 07819619.3
(22) Anmeldetag: 06.11.2007
(51) Int. Cl.: F25D 11/00, F25B 21/00

(54) **KÜHL- UND/ODER GEFRIERGERÄT**
REFRIGERATOR AND/OR FREEZER
APPAREIL DE REFROIDISSEMENT ET/OU DE CONGÉLATION

(30) Priorität: 09.11.2006 DE 202006017167 U; 04.05.2007 DE 202007006404 U
(43) Veröffentlichungstag der Anmeldung: 20.05.2009
(73) Patentinhaber: Liebherr-Hausgeräte Ochsenhausen GmbH, 88411 Ochsenhausen (DE)
(72) Erfinder: WIEST, Matthias, 88416 Hattenburg (DE); SIEGEL, Didier, 88416 Steinhausen (DE)
(74) Vertreter: Herrmann, Uwe
(86) Internationale Anmeldenummer: PCT/EP2007/009599
(87) Internationale Veröffentlichungsnummer: WO 2008/055650

(56) Entgegenhaltungen:
- WO-A-03/050456
- FR-A- 2 861 455

## Beschreibung

Die vorliegende Erfindung betrifft ein Kühl- und/oder Gefriergerät mit einem zu kühlenden Innenraum zur Aufnahme des Kühl- und/oder Gefriergutes sowie mit einem magnetischen Kühler.

Aus dem Stand der Technik ist es bekannt, zur Kühlung des Innenraums eines Kühl- und/oder Gefriergerätes einen sogenannten magnetischen Kühler einzusetzen. Für derartige magnetische Kühler sind unterschiedliche Funktionsprinzipien bekannt.

Beispielsweise kann der magnetische Kühler aus einem magnetokalorischen Material aufgebaut sein, das bei seiner Magnetisierung erwärmt wird und bei seiner Entmagnetisierung eine Abkühlung erfährt. Strömt das Wärmeträgermedium durch den magnetisierten und damit erwärmten Teil des magnetischen Kühlers, wird es erwärmt. Das Wärmeträgermedium durchströmt sodann einen warmen Wärmetauscher, der sich beispielsweise auf der Außenseite des Gerätes befindet und der durch ein geeignetes Kühlmedium gekühlt wird.

Das den entmagnetisierten und damit abgekühlten Bereich des magnetischen Kühlers durchströmende Wärmeträgermedium wird abgekühlt. Das auf diese Weise gekühlte Wärmeträgermedium gelangt sodann zu dem sogenannten kalten Wärmetauscher, der derart angeordnet ist, dass er den Innenraum des Gerätes kühlt.

Dabei ist es bekannt, Magnete relativ zu dem magnetischen Kühler bzw. dessen Wärmetauscher zu bewegen oder Magnete periodisch ein- und auszuschalten. Die genannte Bewegung kann linear oder auch rotatorisch erfolgen. Auch ist es denkbar, nicht die Magnete, sondern den Wärmetauscher des magnetischen Kühlers relativ zum Magneten zu bewegen.

Nach einem weiteren Funktionsprinzip ist vorgesehen, dass Partikel aus magnetokalorischem Material in das Wärmeträgermedium eingebracht werden und das Wärmeträgermedium dann dadurch erwärmt wird, dass das magnetokalorische Material magnetisiert wird und sich damit erwärmt. Eine Abkühlung wird dadurch erzielt, dass das magnetokalorische Material entmagnetisiert wird, wodurch es zu einer Temperaturverringerung des magnetokalorischen Materials und auch des Wärmeträgermediums kommt.

Von der Erfindung ist jede beliebige Art der Ausführung bzw. des Funktionsprinzips eines magnetischen Kühlers umfasst.

Aus dem Stand der Technik sind des weiteren die weithin üblichen Geräte bekannt, die mit einem Kältemittelverdichter arbeiten, der außerhalb des Gerätes positioniert ist. Vorzugsweise wird er im unteren Bereich an der Rückseite des Gerätes angeordnet.

Die WO 03/050456 A1 offenbart eine Ausführungsform eines magnetischen Kühlers.

Die FR 2 861 455 A1 offenbart ein Kühlgerät mit einem magnetischen Kühler für eine industrielle Anwendung, wobei das Kühlgut auf dem Band durch den Kühlraum geführt wird. Im Kühlraum des Gerätes sind ein kalter Wärmeaustauscher und ein Gebläse angeordnet, welches gekühlte Luft in Richtung des Kühlgutes bläst. Die FR2861455 A1 offenbart ein Kühl- und/oder Gefriergerät gemäß dem Oberbegriff des Anspruchs 1.

Der vorliegenden Erfindung liegt die Aufgabe zugrunde, ein Kühl- und/oder Gefriergerät der eingangsgenannten Art dahingehend weiterzubilden, dass dieses mit einfachen Mitteln eine effiziente Kühlung erzielt.

Diese Aufgabe wird durch ein Kühl- und/oder Gefriergerät mit den Merkmalen des Anspruchs 1 gelöst. Danach ist vorgesehen, dass der magnetische Kühler wenigstens teilweise im Innenraum des Gerätes angeordnet ist.

Die Erfindung betrifft des weiteren ein Kühl- und/oder Gefriergerät mit einem zu kühlenden Innenraum zur Aufnahme des Kühl- und/oder Gefriergutes, mit einem magnetischen Kühler sowie mit einer Wärmedämmung, die zwischen dem Innenraum des Gerätes und der Umgebung des Gerätes angeordnet ist, wobei der magnetische Kühler wenigstens teilweise in der Wärmedämmung angeordnet ist.

Der magnetische Kühler kann somit teilweise im Innenraum des Kühl- bzw. Gefriergerätes angeordnet, woraus sich der wesentliche Vorteil ergibt, dass die kalten Leitungen des magnetischen Kühlers nicht zu dämmen sind. Aufgrund der Anordnung des magnetischen Kühlers im Innenraum befinden sich auch die kalten Leitungen, das heißt die Leitungen, die das gekühlte Wärmeträgermedium führen, im Innenraum des Gerätes, wodurch auf deren Wärmedämmung verzichtet werden kann und wodurch ein unerwünschter Wärmeeintrag in das Wärmeträgermedium verhindert werden kann.

Erfindungsgemäß ist vorgesehen, dass das Gerät einen zu kühlenden Innenraum zur Aufnahme des Kühl- und/oder Gefriergutes, einen magnetischen Kühler sowie eine Wärmedämmung aufweist, die dazu dient, den Wärmeeintrag in den Innenraum des Gerätes zu verringern. Erfindungsgemäß ist vorgesehen, dass der magnetische Kühler wenigstens teilweise in der Wärmedämmung angeordnet ist.

Denkbar ist, dass die das kalte Wärmeträgermedium führenden Leitungen wenigstens abschnittsweise innerhalb des Innenraumes des Gerätes angeordnet sind.

Denkbar ist ferner, dass die das kalte Wärmeträgermedium führenden Leitungen wenigstens abschnittsweise in der Wärmedämmung des Gerätes angeordnet sind. In beiden der vorgenannten Fälle kann auf eine gesonderte Wärmedämmung der kalten Leitungen verzichtet werden, da diese im Innenraum des Gerätes bzw. in der bereits vorhandenen Wärmedämmung des Gerätes angeordnet sind, so dass eine zusätzliche Wärmedämmung nicht erforderlich ist.

Denkbar ist ferner, dass die das kalte Wärmeträgermedium führenden Leitungen wenigstens abschnittsweise innerhalb der Wärmedämmung des Gerätes und abschnittsweise im Innenraum des Gerätes angeordnet sind, wo sie mit einem kalten Wärmetauscher in Verbindung stehen.

Der kalte Wärmetauscher ist im Innenraum des Innenbehälters angeordnet.

In weiterer Ausgestaltung der Erfindung ist vorgesehen, dass die das warme Wärmeträgermedium führenden Leitungen wenigstens abschnittsweise außerhalb der Wärmedämmung des Gerätes, das heißt vorzugsweise auf der Geräteaußenseite angeordnet sind.

Weiterhin kann vorgesehen sein, dass die das warme Wärmeträgermedium führenden Leitungen wenigstens abschnittsweise in der Wärmedämmung des Gerätes angeordnet sind.

Erfindungsgemäß ist vorgesehen, dass der magnetische Kühler innerhalb der Wärmedämmung des Gerätes derart angeordnet ist, dass sich dessen kalte Seite im Innenraum des Gerätes und dessen warme Seite auf der Geräteaußenseite befindet.

Denkbar ist ferner, dass sich der magnetische Kühler in der Wärmedämmung des Gerätes befindet und von dort aus die das kalte Wärmeträgermedium führenden Leitungen gegebenenfalls durch die Wärmedämmung in den Innenraum des Gerätes führen und die das warme Wärmeträgermedium führenden Leitungen gegebenenfalls durch die Wärmedämmung auf die Geräteaußenseite führen und dort vorzugsweise mit dem warmen Wärmetauscher in Verbindung stehen, mittels dessen Wärme aus dem Wärmeträgermedium abgeführt wird.

In einem im folgenden dargestellten Ausführungsbeispiel wird der magnetische Kühler im Innenraum des Kühl- und/oder Gefriergerätes angeordnet. Dabei ist vorgesehen, dass die zum/vom magnetischen Kühler führenden Leitungen nicht gedämmt sind.

Aufgrund der Anordnung des magnetischen Kühlers im Innenraum des Gerätes ist die Länge der Leitungen zu dem kalten Wärmetauscher minimal, denn die Kälte wird an der Stelle erzeugt, wo sie gebraucht wird.

Energieverluste auf der kalten Seite sind auf diese Weise nicht zu erwarten.

In einer weiteren Ausgestaltung der Erfindung ist die Positionierung des magnetischen Kühlers derart, dass sich dieser in der Wärmedämmung des Gerätes befindet. Dabei ist vorgesehen, dass sich die kalte Seite des magnetischen Kühlers im Innenraum befindet und die warme Seite des magnetischen Kühlers außerhalb des Gerätes. Auch dabei besteht keine Notwendigkeit, die Leitungen der warmen und kalten Seite zu dämmen.

Energieverluste über die Leitungen sind nicht vorhanden.

Die erfindungsgemäße Ausführung des Kühl- und/oder Gefriergerätes ist somit vergleichsweise einfach, da vorzugsweise vorgesehen ist, dass eine Wärmedämmung der kalten Leitungen, das heißt der das kalte Wärmeträgermedium führenden Leitungen des magnetischen Kühlers entfallen kann. Bei der Anordnung des magnetischen Kühlers im Innenraum des Gerätes wird Kälte in effizienter Weise dort erzeugt, wo sie zur Kühlung des Kühl-/Gefriergutes benötigt wird.

## Patentansprüche

1. Kühl- und/oder Gefriergerät mit einem zu kühlenden Innenraum zur Aufnahme des Kühl- und/oder Gefriergutes, mit einem magnetischen Kühler, der aus einem magnetokalorischen Material aufgebaut ist, das bei seiner Magnetisierung erwärmt wird und bei seiner Entmagnetisierung eine Abkühlung erfährt, sowie mit einer Wärmedämmung, die zwischen dem Innenraum des Gerätes und der Umgebung des Gerätes angeordnet ist und dazu dient, den Wärmeeintrag in den Innenraum des Gerätes zu verringern,
**dadurch gekennzeichnet, dass**
der magnetische Kühler wenigstens teilweise derart in der Wärmedämmung angeordnet ist, dass sich dessen kalte Seite im Innenraum des Gerätes und dessen warme Seite auf der Geräteaußenseite befindet.

2. Kühl- und/oder Gefriergerät nach Anspruch 1, **dadurch gekennzeichnet, dass** die das kalte Wärmeträgermedium führenden Leitungen wenigstens abschnittsweise innerhalb des Innenraumes des Gerätes angeordnet sind.

3. Kühl- und/oder Gefriergerät nach einem der vorhergehenden Ansprüche, **dadurch gekennzeichnet, dass** die das kalte Wärmeträgermedium führenden Leitungen wenigstens abschnittsweise in der Wärmedämmung des Gerätes angeordnet sind.

4. Kühl- und/oder Gefriergerät nach einem der vorhergehenden Ansprüche, **dadurch gekennzeichnet, dass** die das warme Wärmeträgermedium führenden Leitungen wenigstens abschnittsweise außerhalb der Wärmedämmung auf der Außenseite des Gerätes angeordnet sind.

5. Kühl- und/oder Gefriergerät nach einem der vorhergehenden Ansprüche, **dadurch gekennzeichnet, dass** die das warme Wärmeträgermedium führenden Leitungen wenigstens abschnittsweise in der Wärmedämmung des Gerätes angeordnet sind.

6. Kühl- und/oder Gefriergerät nach einem der vorhergehenden Ansprüche, **dadurch gekennzeichnet, dass** der magnetische Kühler innerhalb der Wärmedämmung des Gerätes angeordnet ist, und dass sich dessen kalte Seite im Innenraum des Gerätes und dessen warme Seite auf der Geräteaußenseite befindet.

## Claims

1. A refrigerator and/or freezer with an interior space to be cooled for accommodating the goods to be refrigerated and/or frozen, with a magnetic cooler constructed of a magnetocaloric material which is heated during its magnetization and undergoes cooling during its demagnetization, and with a thermal insulation which is arranged between the interior space of the appliance and the surroundings of the appliance and serves to reduce the input of heat into the interior space of the appliance,
**characterized in that**
the magnetic cooler at least partly is arranged in the thermal insulation such that its cold side is disposed in the interior space of the appliance and its warm side is disposed on the outside of the appliance.

2. The refrigerator and/or freezer according to claim 1, **characterized in that** the conduits carrying the cold heat transfer medium are at least partly arranged within the interior space of the appliance.

3. The refrigerator and/or freezer according to any of the preceding claims, **characterized in that** the conduits carrying the cold heat transfer medium are at least partly arranged in the thermal insulation of the appliance.

4. The refrigerator and/or freezer according to any of the preceding claims, **characterized in that** the conduits carrying the warm heat transfer medium are at least partly arranged outside the thermal insulation on the outside of the appliance.

5. The refrigerator and/or freezer according to any of the preceding claims, **characterized in that** the conduits carrying the warm heat transfer medium are at least partly arranged in the thermal insulation of the appliance.

6. The refrigerator and/or freezer according to any of the preceding claims, **characterized in that** the magnetic cooler is arranged within the thermal insulation of the appliance, and that its cold side is disposed in the interior space of the appliance and its warm side is disposed on the outside of the appliance.

## Revendications

1. Appareil de réfrigération et/ou de congélation comportant un espace intérieur à refroidir, pour la réception des produits à refroidir ou à congeler, comportant un refroidisseur magnétique qui est constitué par un matériau magnétocalorique qui est chauffé lors de sa magnétisation et qui subit un refroidissement lors de sa démagnétisation, comportant aussi un isolant thermique qui est agencé entre l'espace intérieur de l'appareil et l'environnement de l'appareil et qui sert à réduire l'apport de chaleur dans l'espace intérieur de l'appareil,
**caractérisé en ce que**
le refroidisseur magnétique est agencé au moins en partie dans l'isolant thermique de telle sorte que sa face froide se trouve dans l'espace intérieur de l'appareil et sa face chaude se trouve sur la face extérieure de l'appareil.

2. Appareil de réfrigération et/ou de congélation selon la revendication 1, **caractérisé en ce que** les conduites guidant le fluide caloporteur froid sont agencées au moins par tronçons à l'intérieur de l'espace intérieure de l'appareil.

3. Appareil de réfrigération et/ou de congélation selon l'une quelconque des revendications précédentes, **caractérisé en ce que** les conduites guidant le fluide caloporteur froid sont agencées au moins par tronçons dans l'isolant thermique de l'appareil.

4. Appareil de réfrigération et/ou de congélation selon l'une quelconque des revendications précédentes, **caractérisé en ce que** les conduites guidant le fluide caloporteur chaud sont agencées au moins par tronçons à l'extérieur de l'isolant thermique sur la face extérieure de l'appareil.

5. Appareil de réfrigération et/ou de congélation selon l'une quelconque des revendications précédentes, **caractérisé en ce que** les conduites guidant le fluide caloporteur chaud sont agencées au moins par tronçons dans l'isolant thermique de l'appareil.

6. Appareil de réfrigération et/ou de congélation selon l'une des revendications précédentes, **caractérisé en ce que** le refroidisseur magnétique est agencé à l'intérieur de l'isolant thermique de l'appareil et **en ce que** sa face froide se trouve dans l'espace intérieure de l'appareil et sa face chaude se trouve sur la face extérieure de l'appareil.
